# EUROPEAN PATENT APPLICATION

(11) **EP 4 678 610 A1**
(43) Date of publication of application: **14.01.2026**
(21) Application number: 24770233.5
(22) Date of filing: 26.01.2024
(51) Int. Cl.: C03C 27/12, B60J 1/00

(54) **WINDSHIELD**

(30) Priority: 10.03.2023 JP 2023038177
(71) Applicant: Nippon Sheet Glass Company, Limited, Tokyo 108-6321 (JP)
(72) Inventor: CHIBA, Kazuki, Tokyo 108-6321 (JP)
(74) Representative: Fortt, Simon Merton
(86) International application number: PCT/JP2024/002453
(87) International publication number: WO 2024/190113

(57) **Abstract**

The present invention provides a windshield that comprises: an inner glass plate that is disposed on the vehicle interior side; an outer glass plate that is disposed on the vehicle exterior side so as to face the inner glass plate; and an interlayer film that bonds the outer glass plate and the inner glass plate together, wherein the interlayer film is provided with a functional layer and has impact resistance against impacts from the vehicle exterior side.

## Description

### Technical Field

The present invention relates to a windshield.

### Background art

Laminated glass is generally used for a windshield of an automobile. The laminated glass has an outer glass plate, an inner glass plate, and a resin interlayer film for bonding these glass plates. With this configuration, for example, an impact due to collision of an object from the outside of the vehicle can be received by the interlayer film. In recent years, the interlayer film has been required to have various functions, and for example, it has been proposed to dispose a functional film such as a thermal reflection film or an antireflection film in the interlayer film (for example, Patent Literature 1).

### Citation List

### Patent Literature

PTL 1: Japanese Patent Laid-open Publication No. 2007-223883

### Summary of Invention

### Technical Problem

In a case where an impact is applied to the windshield from the outside of the vehicle, the impact cannot be sufficiently received, causing a risk that the inner glass plate breaks and peels off from the interlayer film, and thus a windshield having high impact resistance to an impact from the outside of the vehicle has been demanded.

The present invention has been made to solve the above problem, and an object of the present invention is to provide a windshield capable of improving impact resistance when receiving an impact from the outside of a vehicle.

### Solution to Problem

Clause 1. A windshield including:
an inner glass plate that is disposed on a vehicle interior side;
an outer glass plate that is disposed on a vehicle exterior side so as to face the inner glass plate; and
an interlayer film that bonds the outer glass plate and the inner glass plate together,
in which the interlayer film includes a functional layer and has impact resistance against impact from the vehicle exterior side.

A windshield including:
an inner glass plate that is disposed on a vehicle interior side;
an outer glass plate that is disposed on a vehicle exterior side so as to face the inner glass plate; and
an interlayer film that bonds the outer glass plate and the inner glass plate together,
in which the interlayer film includes a functional layer and has impact resistance against impact from the vehicle exterior side.

Clause 2. The windshield according to Clause 1, in which
the interlayer film includes:
the functional layer;
a first adhesive layer disposed closer to the outer glass plate than the functional layer; and
a second adhesive layer disposed closer to the inner glass plate than the functional layer, and
a thickness of the first adhesive layer is 0.9 mm or more.

Clause 3. The windshield according to Clause 1, in which
the interlayer film includes:
the functional layer;
a first adhesive layer disposed closer to the outer glass plate than the functional layer; and
a second adhesive layer disposed closer to the inner glass plate than the functional layer, and
the first adhesive layer includes at least a core layer and a pair of outer layers having higher rigidity than the core layer and sandwiching the core layer.

Clause 4. The windshield according to Clause 3, in which a Young's modulus of the core layer is 25 MPa or less at a frequency of 100 Hz and a temperature of 20°C.

Clause 5. The windshield according to Clause 3 or 4, in which a Young's modulus of the outer layer is 560 MPa or more at a frequency of 100 Hz and a temperature of 20°C.

Clause 6. The windshield according to any one of Clauses 3 to 5, in which a thickness of the first adhesive layer is 0.76 mm or more.

Clause 7. The windshield according to Clause 1, in which
the interlayer film includes:
the functional layer;
a first adhesive layer disposed closer to the outer glass plate than the functional layer; and
a second adhesive layer disposed closer to the inner glass plate than the functional layer, and
a thickness of the outer glass plate is 2.3 mm or more, and a thickness of the inner glass plate is 2.0 mm or less.

Clause 8. The windshield according to any one of Clauses 2 to 6, in which a thickness of the outer glass plate is larger than a thickness of the inner glass plate. Advantageous Effects of Invention

The windshield according to the present invention can improve impact resistance when receiving an impact from the outside of the vehicle.

### Brief Description of Drawings

[Fig. 1] Fig. 1 shows a plan view of an embodiment in which a laminated glass for automobile according to the present invention is applied to a windshield.
[Fig. 2] Fig. 2 shows a sectional view of Fig. 1.
[Fig. 3] Fig. 3 shows a sectional view of an interlayer film.
[Fig. 4] Fig. 4 shows an example of a block diagram of an in-vehicle system. Description of Embodiments

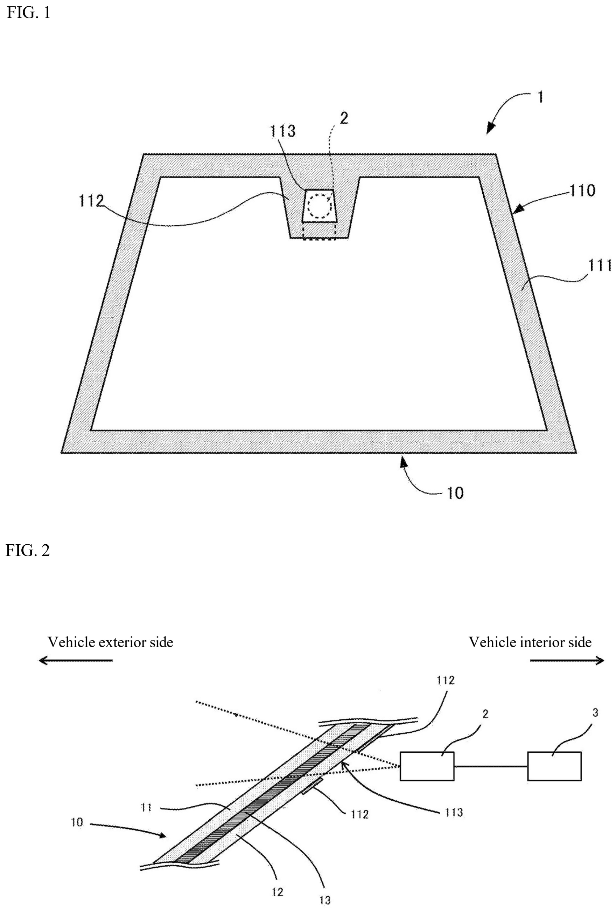

Hereinafter, an embodiment of a windshield of the present invention will be described with reference to the drawings. Fig. 1 shows a plan view of a windshield, and Fig. 2 shows a sectional view of Fig. 1. For the sake of convenience in explanation, the vertical direction in Fig. 1 is referred to as "up-down", "vertical", or "longitudinal", and the horizontal direction in Fig. 1 is referred to as "left-right". Fig. 1 illustrates a windshield viewed from the vehicle interior side. That is, the back side of the drawing of Fig. 1 is the vehicle exterior side, and the front side of the drawing of Fig. 1 is the vehicle interior side.

As shown in Figs. 1 and 2, the windshield includes a laminated glass 10 having a substantially rectangular shape, and is installed on a vehicle body in an inclined state. A mask layer 110 for shielding a visual field from the outside of the vehicle is laminated on an inner surface of the laminated glass 10 facing the vehicle interior side. In addition, the imaging device 2 in which a camera for photographing the situation outside the vehicle is installed is attached to the mask layer 110 via a bracket (not illustrated). The mask layer 110 is provided with an imaging window 113 at a position corresponding to the imaging device 2, and the imaging device 2 can image a situation outside the vehicle via the imaging window 113.

An image processing device 3 is connected to the imaging device 2, and a photographed image acquired by the imaging device 2 is processed by the image processing device 3. The imaging device 2 and the image processing device 3 constitute an in-vehicle system 5, and the in-vehicle system 5 can provide various information to the passenger according to the processing of the image processing device 3. Each component will be described below.

### <1. Laminated glass>

### <1-1. Glass plate>

First, the outer glass plate 11 and the inner glass plate 12 will be described.

As the outer glass plate 11 and the inner glass plate 12, known glass plates can be used, and they can also be formed of heat ray absorbing glass, general clear glass, green glass, dark green glass, or UV green glass. However, it is necessary for these glass plates 11 and 12 to achieve visible light transmittance conforming to a safety standard of a country in which an automobile is used. For example, the required solar absorptivity can be secured by the outer glass plate 11, and the visible light transmittance can be adjusted to satisfy the safety standard by the inner glass plate 12. Hereinafter, examples of clear glass, heat ray absorbing glass, and soda lime based glass will be described.

### (Clear glass)

SiO₂: 70 to 73 mass%
Al₂O₃: 0.6 to 2.4 mass%
CaO: 7 to 12 mass%
MgO: 1.0 to 4.5 mass%
R₂O: 13 to 15 mass% (R is an alkali metal)
Total iron oxide (T-Fe₂O₃) converted to Fe₂O₃: 0.08 to 0.14 mass%

### (Heat ray absorbing glass)

The composition of the heat ray absorbing glass can be, for example, a composition obtained by setting the ratio of total iron oxide (T-Fe₂O₃) in terms of Fe₂O₃ to 0.4 to 1.3 mass%, the ratio of CeO₂ to 0 to 2 mass%, the ratio of TiO₂ to 0 to 0.5 mass%, and subtracting the skeleton components (mainly SiO₂ and Al₂O₃) of the glass by an increase amount of T-Fe₂O₃, CeO₂, and TiO₂ based on the composition of the clear glass.

### (Soda-lime based glass)

SiO₂: 65 to 80 mass%
Al₂O₃: 0 to 5 mass%
CaO: 5 to 15 mass%
MgO: 2 mass% or more
NaO: 10 to 18 mass%
K₂O: 0 to 5 mass%
MgO+CaO: 5 to 15 mass%
Na₂O+K₂O: 10 to 20 mass%
SO₃: 0.05 to 0.3 mass%
B₂O₃: 0 to 5 mass%
Total iron oxide (T-Fe₂O₃) converted to Fe₂O₃: 0.02 to 0.03 mass%

In each of the glass plates 11 and 12, the visible light transmittance can also be adjusted. For this purpose, for example, the glass plate is colored by adjusting the content of Fe₂O₃, thereby allowing the visible light transmittance to be adjusted. For example, a larger content of Fe₂O₃ leads to green color, and the green glass or the dark green glass described above is obtained. In contrast, a smaller content of Fe₂O₃ leads to the above-described clear glass.

The thickness of the laminated glass 10 according to the present embodiment is not particularly limited, but the total thickness of the outer glass plate 11 and the inner glass plate 12 can be, for example, 2.1 to 6 mm, and from the viewpoint of weight reduction, the total thickness of the outer glass plate 11 and the inner glass plate 12 is preferably 2.4 to 3.8 mm, more preferably 2.6 to 3.4 mm, and particularly preferably 2.7 to 3.2 mm.

The outer glass plate 11 is mainly required to have durability and impact resistance against external obstacles, and is required to have impact resistance against a flying object such as a pebble as a windshield of an automobile. In contrast, as the thickness increases, the weight increases, which is not preferable. From this viewpoint, the thickness of the outer glass plate 11 is preferably 1.8 to 2.5 mm, and more preferably 1.9 to 2.4 mm. Which thickness is adopted can be determined according to the application of glass.

The thickness of the inner glass plate 12 can be made equal to that of the outer glass plate 11, but for example, the thickness can be made smaller than that of the outer glass plate 11 in order to reduce the weight of the laminated glass 10. Decreasing the thickness of the inner glass plate 12 can increase the thickness of the outer glass plate 11 as long as it is allowable from the viewpoint of weight reduction. As a result, an impact from the vehicle exterior side can be mitigated. As a result, the effect of preventing the adhesive layer from peeling between the functional film and the glass plate can be enhanced by the impact from the outside. Specifically, in consideration of the strength of glass, the thickness is preferably 0.6 to 2.3 mm, preferably 0.8 to 1.6 mm, and particularly preferably 1.0 to 1.4 mm. Further, the thickness is preferably 0.8 to 1.3 mm. As a result, for example, the thickness of the outer glass plate 11 can be set to 2.3 mm or more, and impact resistance can be improved.

In addition, the laminated glass 10 is curved so as to be convex toward the vehicle exterior side, and in this case, the measurement positions of the thickness are two positions above and below a center line extending in the vertical direction at the center of the laminated glass 10 in the horizontal direction. The measuring device is not particularly limited, but for example, a thickness gauge such as SM-112 manufactured by TECLOCK Co., Ltd. can be used. At the time of measurement, the laminated glass 10 is disposed such that the curved surface of the laminated glass is placed on a flat surface, and the end of the laminated glass 10 is sandwiched and measured with the thickness gauge.

### <1-2. Interlayer film>

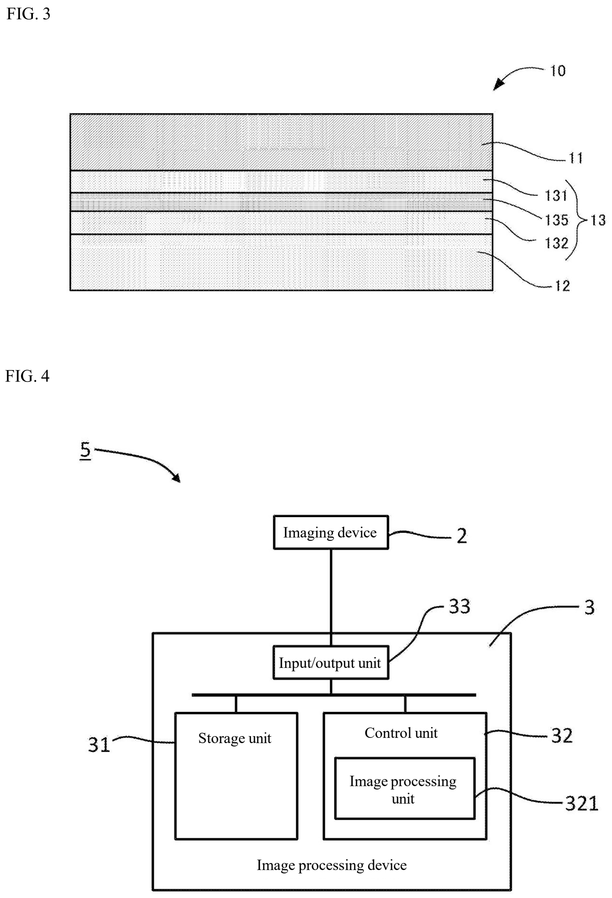

As shown in Fig. 3, the interlayer film 13 of the first aspect includes a transparent first adhesive layer 131 adhered to the outer glass plate 11, a transparent second adhesive layer 132 adhered to the inner glass plate 12, and a functional layer 135 disposed between both the adhesive layers 131,132.

### <1-2-1. Adhesive layer>

The first adhesive layer 131 and the second adhesive layer 132 are not particularly limited as long as they are adhered to the glass plates 11 and 12 by fusion, and can be formed of, for example, a polyvinyl butyral resin (PVB), an ethylene vinyl acetate resin (EVA), or the like. In general, the hardness of the polyvinyl acetal resin can be controlled by (a) the polymerization degree of polyvinyl alcohol as a starting material, (b) the acetalization degree, (c) the type of plasticizer, (d) the ratio of plasticizer added, and the like.

The surfaces of the first adhesive layer 131 and the second adhesive layer 132 before bonded to the glass plates 11 and 12 may be subjected to embossing thereon when bonded to the functional layer 135 or each of the glass plates 11 and 12, in order to easily push out air.

The second adhesive layer 132 can be prepared singly at the time of production, but for example, can be laminated previously on the surface of the functional layer 135 on the vehicle interior side. In this case, the interlayer film 13 is produced by overlapping two layers of the first adhesive layer 131 and the functional layer 135 with the second adhesive layer 132.

The thicknesses of the first adhesive layer 131 and the second adhesive layer 132 are not particularly limited, but are, for example, preferably 0.001 to 2.0 mm, and more preferably 0.1 to 1.0 mm. However, the thicknesses of both the adhesive layers 131 and 132 may be the same or different. For example, as described above, when the second adhesive layer 132 is laminated on the functional layer 135 previously, the thickness of the second adhesive layer 132 can be 0.001 to 0.100 mm.

In addition, the total thickness of both the adhesive layers 131 and 132 is preferably 0.76 mm or more. This is to ensure penetration resistance performance and the like as defined in JIS R3211 and R3212, for example, in the windshield.

However, from the viewpoint of peeling resistance at the time of impact, the thickness of at least one of the adhesive layers 131 and 132 is preferably 0.9 mm or more, more preferably 1.1 mm or more, and still more preferably 2.0 mm or more. For example, the thickness of the first adhesive layer 131 can be 1.1 µm or more, and the thickness of the second adhesive layer 132 can be 25 µm or more. As a result, when an impact from the outside of the vehicle is received, the impact can be absorbed by the first adhesive layer 131, and it is possible to suppress the inner glass plate 12 from separating from the interlayer film 13 and scattering in the vehicle.

In addition, the upper limit of the thickness of the entire interlayer film 13 is not particularly limited, but the thickness of the interlayer film 13 is preferably 10.0 mm or less from the viewpoint of weight reduction.

### <1-2-2. Functional layer>

As the functional layer 135, films having various functions can be used depending on the application. For example, a known heat shielding film, a heat generating film, a projection film, a light emitting film, an antenna film, a sound insulating film, a light control film, or the like can be used.

The heat shielding film is a film configured to mainly reflect or absorb infrared rays in order to suppress a rise in temperature in the vehicle interior. For example, in order to suppress the temperature rise in the vehicle interior, a known infrared reflecting film (IR reflecting film) that mainly reflects infrared rays can be adopted.

The heat generating film is a film for removing fogging or deicing, and can be formed by supporting, by the base film, a plurality of thin wires that generate heat by applying a voltage.

The projection film is a film for projecting information by light emitted from a head-up display device. The projection film is not particularly limited as long as it is, for example, a film having a refractive index different from those of both the adhesive layers 131 and 132 and reflecting light. The size of the projection film is not particularly limited, but is preferably larger than a region where information is projected.

The light emitting film is a film incorporating an LED or the like, and emitting light indicating a predetermined character, figure, or the like.

Similarly to the heat generating film, the antenna film is a film in which antennas such as FM, AM, DTV, and DAB are disposed on a base film. The above is an example of the functional layer 133, and is not limited thereto.

The sound insulating film can be configured by three layers in which a soft core layer having low rigidity is sandwiched between a pair of skin layers (also referred to as outer layers) having higher rigidity than the soft core layer. However, the sound insulating film is not limited to this configuration, and may be formed of a plurality of layers having a soft core layer. For example, the sound insulating film can be formed of two layers including the core layer (one core layer and one skin layer), five or more odd-numbered layers disposed around the core layer (one core layer and four skin layers), or an even-numbered layers including the core layer inside (one core layer and other layers being skin layers).

The core layer is not particularly limited as long as it is softer than the skin layer, and in this respect, the material can be selected on the basis of Young's modulus. For example, the Young's modulus of the core layer is preferably 1 MPa or more and 25 MPa or less at a frequency of 100 Hz and a temperature of 20 degrees. In particular, the upper limit is preferably 20 MPa or less, more preferably 16 MPa or less, and particularly preferably 10 MPa or less.

As a measurement method, for example, frequency dispersion measurement can be performed at a strain amount of 0.05% using a solid viscoelasticity measuring device DMA 50 manufactured by Metravib Material Testing SAS. Hereinafter, in the present specification, the Young's modulus is a value measured by the above method unless otherwise specified. However, a measured value is used for measurement when the frequency is 200 Hz or less, but a calculated value based on the measured value is used when the frequency is more than 200 Hz. This calculated value is based on a master curve calculated from the measured value by using the WLF method.

In contrast, the Young's modulus of the skin layer is not particularly limited, and may be larger than that of the core layer. For example, at a frequency of 100 Hz and a temperature of 20 °C, 400 MPa or more, 440 MPa or more, 560 MPa or more, 650 MPa or more, 1300 MPa or more, and 1764 MPa or more are preferable in this order. In contrast, the upper limit of the Young's modulus of the skin layer is not particularly limited.

In addition, when a pair of skin layers sandwiching the core layer is provided, the Young's modulus of the skin layer on the outer glass plate 11 side is preferably larger than the Young's modulus of the skin layer on the inner glass plate 12 side. In addition, increasing the difference in Young's modulus between the core layer and the skin layer allows shock due to impact from the outside of the vehicle to be absorbed, and impact resistance to be enhanced.

In addition, the material constituting the core layer and the skin layer is not particularly limited, but needs to be a material having at least a Young's modulus in the above range, and for example, a resin material can be used. Specifically, for example, the skin layer can be configured by a polyvinyl butyral resin (PVB). The polyvinyl butyral resin is preferable because of being excellent in adhesion to each glass plate and penetration resistance. In contrast, the core layer can be configured by ethylene vinyl acetate resin (EVA) or polyvinyl acetal resin softer than the polyvinyl butyral resin constituting the skin layer. Sandwiching the soft core layer therebetween allows the sound insulation performance to be greatly improved while maintaining the same adhesion and penetration resistance as those of the single-layered resin interlayer film.

Such a sound insulating film can be used as the first adhesive layer 131 or the second adhesive layer 132 in addition to being used as the functional layer. For example, as the first adhesive layer 131, the above-described sound insulating film having a thickness of 760 µm or more can be adopted. The sound insulating film is configured by a plurality of layers and the core layer is soft as described above, and thus this can absorb an impact from the outside of the vehicle, and it is possible to suppress the inner glass plate 12 from separating from the interlayer film 13 and scattering in the vehicle.

The light control film (electrochromic sheet) has a property of light transmittance changing by applying a voltage. Thereby, the transmittance and the colorability can be changed. The light control film contains, for example, an electrochromic compound and a metal alkoxy compound. Containing the metal alkoxy compound leads to excellent adhesion to the conductive film.

The thickness of the film constituting the functional layer 133 as described above is not particularly limited, but for example, is preferably 0.01 to 2.0 mm, and more preferably 0.03 to 0.6 mm. As described above, the upper limit of the thickness of the end surface of the peripheral edge of the film is preferably 2.0 mm. This is because a larger thickness of the end surface of the film leads to generation of a step in the interlayer film 13 since the functional layer 133 is smaller than both the adhesive layers 131 and 132, and this step may cause air to be included and bubbles to be generated when the interlayer film 13 is sandwiched between both the glass plates 11 and 12.

In addition, examples of the functional layer that can be used include a layer having various functions such as a specific wavelength range electromagnetic wave reflecting layer including a hologram layer, a conductive layer, and an ultraviolet reflecting layer, a color correcting layer, a specific wavelength range light absorbing layer including an infrared absorbing layer and an ultraviolet absorbing layer, a light emitting layer including a fluorescent layer, a thermochromic layer, a photochromic layer, a design layer, and a high elastic modulus layer. In addition, a plurality of functional layers 133 having the same or different functions may be included. In addition, the functional layer may have a fine uneven pattern on the surface of the film.

In addition, a film or a device having functions such as infrared ray reflection, light emission, power generation, light control, visible light reflection, scattering, decoration, absorption, and electric heating may be provided between both the glass plates 210 and 220 of the glass plates 11 and 12 in addition to the interlayer film 13 or in the interlayer film 13 as long as the effects of the present embodiment described later are not impaired. In addition, a film having functions such as anti-fog, water repellency, heat shielding, and low reflection may be disposed on the surface of at least one of the glass plates 11 and 12.

The adhesive layers 131 and 132 and the functional layer 135 described above can be appropriately combined.

### <2. Mask layer>

Then, the mask layer 110 will be described. As illustrated in Figs. 1 and 2, in the present embodiment, the mask layer 110 is laminated on the inner surface 130 of the laminated glass 10 on the vehicle interior side (the inner surface of the inner glass plate 12), and is formed along the peripheral edge portion of the laminated glass 10. Specifically, as shown in Fig. 1, the mask layer 110 can be divided into a peripheral edge region 111 along the peripheral edge portion of the laminated glass 10 and a protruding region 112 protruding downward in a rectangular shape from the upper side portion of the laminated glass 10. The peripheral edge region 111 shields incidence of light from a peripheral edge portion of the windshield. In addition, when the functional layer 135 is smaller than the glass plates 11 and 12, the peripheral edge portion thereof can be hidden by the peripheral edge region 111. In contrast, the protruding region 112 makes the imaging device 2 disposed in the vehicle invisible from the outside of the vehicle.

However, if the mask layer 110 shields the imaging range of the imaging device 2, the imaging device 2 cannot image the situation in front of the outside of the vehicle. Therefore, in the present embodiment, the rectangular imaging window 113 is provided at a position corresponding to the imaging device 2 in the protruding region 112 of the mask layer 110 such that the imaging device 2 can image the situation outside the vehicle.

The mask layer 110 can be laminated on, for example, the inner surface of the outer glass plate 11 and the outer surface of the inner glass plate 12 in addition to being laminated on the inner surface of the inner glass plate 12 as described above. In addition, the mask layer 110 can be laminated at two positions, i.e., on the inner surface of the outer glass plate 11 and the inner surface of the inner glass plate 12.

Then, a material of the mask layer 110 will be described. The material of the mask layer 110 may be appropriately selected according to the embodiment as long as it can shield the field of view from the outside of the vehicle, and for example, a dark color ceramic such as black, brown, gray, and deep blue may be used.

When black ceramic is selected as the material of the mask layer 110, for example, the black ceramic is laminated on the peripheral edge portion on the inner surface 130 of the inner glass plate 12 by screen printing or the like, and the laminated ceramic is heated together with the inner glass plate 12. This allows the mask layer 110 to be formed on the peripheral edge portion of the inner glass plate 12. In addition, when the black ceramic is printed, a region where the black ceramic is not partially printed is provided. This allows the imaging window 113 to be formed. Various materials can be used as the ceramic used for the mask layer 110. For example, a ceramic having a composition shown in Table 1 below can be used for the mask layer 110.

**[Table 1]**

| | | First and second colored ceramic pastes |
|---|---|---|
| Pigment *1 | Mass% | 10 |
| Resin (cellulose resin) | Mass% | 10 |
| Organic solvent (pine oil) | Mass% | 10 |
| Glass binder *2 | Mass% | 70 |
| Viscosity | dPs | 150 |

| | | |
|---|---|---|
| *1, Main component: copper oxide, chromium oxide, iron oxide, and manganese oxide *2, Main component: bismuth borosilicate and zinc borosilicate | | |

### <3. In-vehicle system>

Then, an in-vehicle system 5 including an imaging device 2 and an image processing device 3 will be described with reference to Fig. 4. Fig. 4 illustrates a configuration of the in-vehicle system 5. As illustrated in Fig. 4, the in-vehicle system 5 according to the present embodiment includes the imaging device 2 and an image processing device 3 connected to the imaging device 2.

The image processing device 3 is a device that processes a captured image acquired by the imaging device 2. This image processing device 3 has, for example, general hardware such as a storage unit 31, a control unit 32, and an input/output unit 33 connected by a bus as a hardware configuration. However, the hardware configuration of the image processing device 3 is not limited to such an example, and regarding the specific hardware configuration of the image processing device 3, components can be added, omitted, and added as appropriate according to the embodiment.

The storage unit 31 stores various data and programs used in the processing executed by the control unit 32 (not illustrated). The storage unit 31 may be implemented by, for example, a hard disk or a recording medium such as a USB memory. In addition, the various data and programs stored in the storage unit 31 may be acquired from a recording medium such as a compact disc (CD) or a digital versatile disc (DVD). Further, the storage unit 31 may be referred to as an auxiliary storage device.

As described above, the laminated glass 10 is disposed in an inclined posture with respect to the vertical direction and is curved. Then, the imaging device 2 captures the situation outside the vehicle through such laminated glass 10. Therefore, the captured image acquired by the imaging device 2 is deformed according to the posture, shape, refractive index, optical defect, and the like of the laminated glass 10. In addition, aberrations unique to the camera lens of the imaging device 2 are added. Thus, the storage unit 31 may store correction data for correcting an image deformed by such aberrations of the laminated glass 10 and the camera lens.

The control unit 32 has one or a plurality of processors such as a microprocessor or a central processing unit (CPU), and a peripheral circuit (ROM (Read Only Memory), RAM (Random Access Memory), interface circuit, and the like) used for processing of the processor. The ROM, the RAM, and the like may be referred to as a main storage device in the sense that they are disposed in an address space handled by the processor in the control unit 32. The control unit 32 functions as the image processing unit 321 by executing various data and programs stored in the storage unit 31.

The image processing unit 321 processes the captured image acquired by the imaging device 2. The processing of the captured image can be appropriately selected according to the embodiment. For example, the image processing unit 321 may recognize a subject appearing in the captured image by analyzing the captured image by pattern matching or the like. In the present embodiment, the imaging device 2 captures an image of the situation in front of the vehicle, and thus the image processing unit 321 may further determine whether or not a living thing such as a human is captured in front of the vehicle on the basis of the subject recognition. Then, in a case where a person appears in front of the vehicle, the image processing unit 321 may output a warning message by a predetermined method. In addition, for example, the image processing unit 321 may perform predetermined processing on the captured image. Then, the image processing unit 321 may output the processed captured image to a display device (not illustrated) such as a display connected to the image processing device 3.

The input/output unit 33 is one or a plurality of interfaces for transmitting/receiving data to/from a device existing outside the image processing device 3. The input/output unit 33 is, for example, an interface for connection with a user interface or an interface such as a universal serial bus (USB). In the present embodiment, the image processing device 3 is connected to the imaging device 2 via the input/output unit 33, and acquires the image captured by the imaging device 2.

As such an image processing device 3, a general-purpose device such as a personal computer (PC) or a tablet terminal may be used in addition to a device designed exclusively for a service to be provided.

In addition, the information acquisition device is mounted on a bracket (not illustrated), and the bracket is mounted on the mask layer 110. Therefore, in this state, the mount of the information acquisition device on the bracket and the mount of the bracket on the mask layer are adjusted such that the optical axis of the camera of the information acquisition device passes through the imaging window 113. In addition, a cover (not illustrated) is mounted on the bracket so as to cover the imaging device 2. Therefore, the imaging device 2 is disposed in a space surrounded by the laminated glass 10, the bracket, and the cover, and cannot be seen from the vehicle interior side, and only a part of the imaging device 2 can be seen from the vehicle exterior side through the imaging window 113. Then, the imaging device 2 and the above-described input/output unit 33 are connected by a cable (not illustrated), and this cable is pulled out from the cover and connected to the image processing device 3 disposed at a predetermined position in the vehicle.

### <4. Method for producing windshield>

Then, an example of a method for producing the windshield configured as described above will be described. First, a method for producing the laminated glass 10 will be described.

First, the above-described mask layer 110 is laminated on at least one of the outer glass plate 11 and the inner glass plate 12 having a flat plate shape. Then, these glass plates 11 and 12 are molded to be curved. The molding method is not particularly limited, and a known method can be adopted. For example, the flat glass plate passes through the heating furnace and then is pressed with an upper die and a lower die, thereby allowing a curved shape to be molded. Alternatively, a flat outer glass plate and inner glass plate are stacked, disposed on a molding die of a frame mold, and passed through a heating furnace. As a result, both glass plates are softened and molded into a curved shape by their own weight.

As described above, the outer glass plate 11 and the inner glass plate 12 are molded into a curved shape, subsequently, the interlayer film 13 described above is sandwiched between the outer glass plate 11 and the inner glass plate 12, and this is put in a rubber bag and preliminarily bonded at approximately 70 to 110°C while being sucked under reduced pressure. Other methods are possible as the preliminary bonding method. For example, the interlayer film 13 is sandwiched between the outer glass plate 11 and the inner glass plate 12, and heated at 45 to 65°C by an oven. Subsequently, this laminated glass is pressed with a roll at 0.45 to 0.55 MPa. Then, this laminated glass is heated again at 80 to 105°C by the oven, and then pressed again by the roll at 0.45 to 0.55 MPa. As described above, the preliminary bonding is completed.

Then, primary bonding is performed. The preliminarily bonded laminated glass is subjected to primary bonding by an autoclave at, for example, 8 to 15 atm and 100 to 150°C. Specifically, for example, the primary bonding can be performed under the condition of 14 atm and 145°C. As described above, the laminated glass 10 according to the present embodiment is produced.

### <5. Features>

The windshield described above can improve impact resistance. That is, when an impact is received from the outside, it is possible to suppress the inner glass plate 12 from being peeled off from the interlayer film and scattering in the vehicle.

### <6. Modification>

An embodiment of the present invention has been described above, but the present invention is not limited to the above embodiment, and various modifications can be made without departing from the gist thereof. The following modifications can be appropriately combined.

### <6-1>

The shape of the mask layer 110 is an example, and the configuration is not particularly limited, and the shape can be appropriately changed according to a device or the like provided.

### <6-2>

In the above embodiment, the imaging window 113 is formed in the mask layer 110 and the imaging device 2 is disposed, but the imaging window 113 and the imaging device 2 may not be provided.

### Examples

Hereinafter, examples of the present invention will be described. However, the present invention is not limited to the following examples.

Hereinafter, windshields according to Examples 1 to 17 were fabricated. Specifically, the examples are as shown in Table 2 below.

As shown in Table 2, in Examples 1 and 7 to 17, the sound insulating film described above was used as the first adhesive layer (adhesive layer on the vehicle exterior side). That is, the sound insulating film including a core layer having a low Young's modulus and a pair of skin layers having a high Young's modulus is used. In Examples 2 to 6, the first adhesive layer was configured by a single-layer film. In addition, in Examples 1 to 16, an infrared reflecting film was used as the functional layer, and in Example 17, an electrochromic sheet was used.

The core layer was formed of ethylene vinyl acetate resin (EVA), and the skin layer was formed of polyvinyl butyral resin (PVB). In addition, the second adhesive layer (adhesive layer on the vehicle interior side) was formed of a polyvinyl butyral resin (PVB).

In Example 2, peeling of the functional film is prevented by thickening the glass plate on the vehicle exterior side. Similarly, in Examples 7 and 8, the weight is reduced by thinning the glass plate on the vehicle interior side, and peeling of the inner glass plate from the interlayer film is suppressed by thickening the glass plate on the vehicle exterior side.

In Examples 3 to 6, peeling of the inner glass plate from the interlayer film is suppressed by setting the thickness of the first adhesive layer to 0.9 mm or more.

In Examples 9 to 11, peeling of the inner glass plate from the interlayer film is suppressed by using a sound insulating film having a thick core layer as the first adhesive layer.

In Examples 12 to 15, a sound insulating film in which the Young's modulus of the core layer is decreased and the Young's modulus of the skin layer is increased is used as the first adhesive layer. Increasing the difference in Young's modulus between the core layer and the skin layer as described above causes shock due to impact from the outside of the vehicle to be absorbed, and impact resistance to be enhanced, thereby suppressing peeling of the inner glass plate from the interlayer film.

In Example 16, a sound insulating film having a thick core layer is used as the first adhesive layer. Such an interlayer film having a high sound insulation effect is used to suppress peeling of the inner glass plate from the interlayer film.

In Example 17, an electrochromic film was used as a functional layer. When such a film is used, the same effect is recognized.

An impact resistance test defined in JIS 3212 (2021) 5.4 was performed on Examples 1 to 17 described above, and all of Examples 1 to 17 satisfied the criteria in this test, that is, the criteria defined in JIS3211 (2021) 5.3. Therefore, it can be said that the windshield according to Examples 1 to 17 has impact resistance against impact from the vehicle exterior side.

**[Table 2]**

| | Glass plate on vehicle interior side | | Adhesive layer on vehicle interior side | | Functional film | | Adhesive layer on vehicle exterior side | | | | | Glass plate on vehicle exterior side | | Evaluation |
|---|---|---|---|---|---|---|---|---|---|---|---|---|---|---|
| | Vehicle interior side | | (Single layer) | | | | Core layer | | Skin layer | | Total thickness | Vehicle exterior side | | |
| | Thickness | Type | Thickness | Elastic modulus | Type | Thickness | Thickness | Elastic modulus | Thickness | Elastic modulus | | Thickness | Type | |
| | mm | | mm | MPa | | mm | mm | MPa | mm | MPa | mm | mm | | |
| Example 1 | 2 | LightGreen | 0.05 | 441 | IR reflective film | 0.05 | 0.1 | 19 | 0.33 | 441 | 0.76 | 2 | LightGreen | ○ |
| Example 2 | 2 | LightGreen | 0.05 | 441 | IR reflective film | 0.05 | - | - | 0.76 | 441 | 0.76 | 2.3 | LightGreen | ○ |
| Example 3 | 2 | LightGreen | 0.05 | 441 | IR reflective film | 0.05 | - | - | 0.9 | 441 | 0.9 | 2 | LightGreen | ○ |
| Example 4 | 2 | LightGreen | 0.05 | 441 | IR reflective film | 0.05 | - | - | 1.13 | 441 | 1.13 | 2 | LightGreen | ○ |
| Example 5 | 2 | LightGreen | 0.05 | 441 | IR reflective film | 0.05 | - | - | 1.52 | 441 | 1.52 | 2 | LightGreen | ○ |
| Example 6 | 2 | LightGreen | 0.05 | 441 | IR reflective film | 0.05 | - | - | 2.28 | 441 | 2.28 | 2 | LightGreen | ○ |
| Example 7 | 1.1 | LightGreen | 0.05 | 441 | IR reflective film | 0.05 | 0.1 | 19 | 0.33 | 441 | 0.76 | 2 | LightGreen | ○ |
| Example 8 | 1.3 | LightGreen | 0.05 | 441 | IR reflective film | 0.05 | 0.1 | 19 | 0.33 | 441 | 0.76 | 1.8 | LightGreen | ○ |
| Example 9 | 2 | LightGreen | 0.05 | 441 | IR reflective film | 0.05 | 0.2 | 19 | 0.28 | 441 | 0.76 | 2 | LightGreen | ○ |
| Example 10 | 2 | LightGreen | 0.05 | 441 | IR reflective film | 0.05 | 0.4 | 19 | 0.18 | 441 | 0.76 | 2 | LightGreen | ○ |
| Example 11 | 2 | LightGreen | 0.05 | 441 | IR reflective film | 0.05 | 0.6 | 19 | 0.08 | 441 | 0.76 | 2 | LightGreen | ○ |
| Example 12 | 2 | LightGreen | 0.05 | 441 | IR reflective film | 0.05 | 0.1 | 9.5 | 0.33 | 441 | 0.76 | 2 | LightGreen | ○ |
| Example 13 | 2 | LightGreen | 0.05 | 441 | IR reflective film | 0.05 | 0.1 | 19 | 0.33 | 882 | 0.76 | 2 | LightGreen | ○ |
| Example 14 | 2 | LightGreen | 0.05 | 441 | IR reflective film | 0.05 | 0.1 | 9.5 | 0.33 | 882 | 0.76 | 2 | LightGreen | ○ |
| Example 15 | 2 | LightGreen | 0.05 | 441 | IR reflective film | 0.05 | 0.1 | 9.5 | 0.33 | 1764 | 0.76 | 2 | LightGreen | ○ |
| Example 16 | 2 | LightGreen | 0.05 | 441 | IR reflective film | 0.05 | 0.1 | 9.5 | 1.5 | 441 | 3.1 | 2 | LightGreen | ○ |
| Example 17 | 2 | LightGreen | 0.05 | 441 | Electrochromic sheet | 0.21 | 0.1 | 19 | 0.33 | 441 | 0.75 | 2 | LightGreen | ○ |

### Reference Signs List

1 Windshield
11 Outer glass plate
12 Inner glass plate
13 Interlayer film
131 First adhesive layer
132 Second adhesive layer
135 Functional layer

## Claims

1. A windshield comprising:
an inner glass plate that is disposed on a vehicle interior side;
an outer glass plate that is disposed on a vehicle exterior side so as to face the inner glass plate; and
an interlayer film that bonds the outer glass plate and the inner glass plate together,
wherein the interlayer film includes a functional layer and has impact resistance against impact from the vehicle exterior side.

2. The windshield according to claim 1, wherein
the interlayer film includes:
the functional layer;
a first adhesive layer disposed closer to the outer glass plate than the functional layer; and
a second adhesive layer disposed closer to the inner glass plate than the functional layer, and
a thickness of the first adhesive layer is 0.9 mm or more.

3. The windshield according to claim 1, wherein
the interlayer film includes:
the functional layer;
a first adhesive layer disposed closer to the outer glass plate than the functional layer; and
a second adhesive layer disposed closer to the inner glass plate than the functional layer, and
the first adhesive layer includes at least a core layer and a pair of outer layers having higher rigidity than the core layer and sandwiching the core layer.

4. The windshield according to claim 3, wherein a Young's modulus of the core layer is 25 MPa or less at a frequency of 100 Hz and a temperature of 20°C.

5. The windshield according to claim 3 or 4, wherein a Young's modulus of the outer layer is 560 MPa or more at a frequency of 100 Hz and a temperature of 20°C.

6. The windshield according to claim 3, wherein a thickness of the first adhesive layer is 0.76 mm or more.

7. The windshield according to claim 1, wherein
the interlayer film includes:
the functional layer;
a first adhesive layer disposed closer to the outer glass plate than the functional layer; and
a second adhesive layer disposed closer to the inner glass plate than the functional layer, and
a thickness of the outer glass plate is 2.3 mm or more, and a thickness of the inner glass plate is 2.0 mm or less.

8. The windshield according to claim 2 or 3, wherein a thickness of the outer glass plate is larger than a thickness of the inner glass plate.
